# EUROPEAN PATENT APPLICATION

(11) **EP 3 032 759 A1**
(43) Date of publication of application: **15.06.2016**
(21) Application number: 14833943.5
(22) Date of filing: 04.08.2014
(51) Int. Cl.: H04B 7/26

(54) **METHOD AND DEVICE FOR HOST CONFIGURATION**

(30) Priority: 05.08.2013 CN 201310337395
(71) Applicant: China Academy of Telecommunications Technology, Haidian District Beijing 100191 (CN)
(72) Inventor: WU, Yumin, Beijing 100191 (CN); CHEN, Dong, Beijing 100191 (CN); LIANG, Jing, Beijing 100191 (CN)
(74) Representative: Körber, Martin Hans
(86) International application number: PCT/CN2014/083649
(87) International publication number: WO 2015/018304

(57) **Abstract**

The embodiments of the present invention relate to the field of wireless communications technology, and specifically relate to a method and device for host configuration, used for solving the problem, in the prior art, of an eNB being unable to configure a host for a UE when establishing a host corresponding to a certain resource identifier for the UE. The method of the embodiments of the present invention comprises: a network side equipment determining, according to a first correlation between a resource parameter configuration identifier and resource parameter configuration information, the resource parameter configuration information corresponding to the resource parameter configuration identifier for a user equipment; configuring a host for said user equipment according to the determined resource parameter configuration information. The network side equipment of the embodiments of the present invention can know, when establishing a host corresponding to a resource identifier, the resource parameter configuration corresponding to the resource identifier and thus configure for the UE a host corresponding to the resource identifier, improving system performance.

## Description

This application claims the priority to Chinese Patent Application No. 201310337395.X, filed with the State Intellectual Property Office of People's Republic of China on August 5, 2013 and entitled "Method and device for configuring a bearer", the content of which is hereby incorporated by reference in its entirety.

### Field

The present invention relates to the field of wireless communications and particularly to a method and device for configuring a bearer.

### Background

In order to facilitate deployment of a new service, the Long Term Evolution (LTE) system is designed with separation of the user plane from the control plane so that control plane signaling and a user plane bearer are dominated respectively by separate network elements, which are a Mobile Management Entity (MME) and a Serving Gateway (SGW). The MME primarily functions for Non-Access Stratum (NAS) signaling setup, NAS signaling security, signaling setup across a core network, service tracking (for a UE in an idle mode), a roaming service, authorization and bearer management, etc. The SGW functions as a gateway for Evolved NodeB (eNB) switching, a gateway for forwarding 2G/3G and other system services, for buffering downlink packets, for some initializing operations, specified interception and detection, packet routing and forwarding, etc. A Packet Data Gateway (PDN GW or PGW) functions for policy enforcement, packet filtering, specified interception, allocation of User Equipment Internet Protocol (UEIP) addresses, charging, packet reproduction, etc.

A fast path or connectionless transmission solution to the core network is proposed, where in an attachment or Tracking Area Update (TAU) procedure of the user equipment, the MME selects some bearer, and allocates an SGW bearer index ID, i.e., a resource identifier, for the user equipment so that there is one-to-one mapping between the resource identifier, an SGW S1 user plane interface (S1-U) Tunnel End Point Identifier (TEID), and an IP address, and the UE and the eNB can be provided with the SGW S1-U TEID and the IP address. The SGW S1-U TEID is a Tunnel End Point Identifier (TEID) of the SGW determined by the network in the General Packet Radio Service (GPRS) Tunneling Protocol for User Plane (GTP-U) while setting up the S1-U bearer of the eNB for the UE. The user equipment stores the identifier.

For data transmission triggered by arriving uplink data, if both the network and the user equipment support this transmission solution, then the user equipment may decide whether to enable transmission in this solution. The user equipment transmits uplink data by carrying the resource identifier in the data. The eNB decodes the data, obtains address information of the SGW according to the resource identifier, and forwards a GTP-U data packet including the information to the corresponding SGW, where the data packet also includes the eNB S1-U TEID allocated by the eNB.

For data transmission triggered by arriving downlink data, if the SGW finds that no bearer is activated (there is no corresponding eNB S1-U TEID), then the SGW may page the user equipment through the MME, and the user equipment may initiate a Radio Resource Control (RRC) connection to activate the bearer.

Each UE can be provided with a plurality of different resource identifiers corresponding to different QoS configurations.

At present an advantage of this solution is that a signaling procedure of setting up the control plane between the eNB and the MME, and a signaling procedure of setting up the user plane between other Central Nodes (CNs) are omitted.

However in the existing fast path or connectionless transmission solution, each UE may be provided with a plurality of resource identifiers, each of which may correspond to different resource parameter configurations. The eNB setting up for the UE a bearer corresponding to some resource identifier cannot configure the UE with the bearer due to no knowledge of the resource parameter configuration corresponding to the resource identifier.

### Summary

Embodiments of the invention provide a method, system, and device for configuring a bearer so as to address the problem in the prior art that in the existing fast path or connectionless transmission solution, each UE may be provided with a plurality of resource identifiers, each of which may correspond to different resource parameter configurations. The eNB setting up for the UE a bearer corresponding to some resource identifier cannot configure the UE with the bearer due to no knowledge of the resource parameter configuration corresponding to the resource identifier.

An embodiment of the invention provides a method for configuring a bearer, the method including:
determining, by a network-side device, resource parameter configuration information corresponding to a resource parameter configuration identifier for a user equipment according to a first correspondence relationship between the resource parameter configuration identifier and the resource parameter configuration information; and
configuring, by the network-side device, the user equipment with a bearer according to the determined resource parameter configuration information.

Since the network-side device determines resource parameter configuration information corresponding to a resource parameter configuration identifier for a user equipment according to a first correspondence relationship between the resource parameter configuration identifier and the resource parameter configuration information, so that the network-side device according to the embodiment of the invention setting up for the UE a bearer corresponding to a resource identifier can know the resource parameter configuration corresponding to the resource identifier to thereby configure the UE with the bearer corresponding to the resource identifier so as to improve the performance of the system.

Alternatively before the network-side device determines the resource parameter configuration information corresponding to the resource parameter configuration identifier for the user equipment, the method further includes:
receiving and storing, by the network-side device, the first correspondence relationship from an OAM device or an MME.

The network-side device can receive the first correspondence relationship from the OAM device or the MME to thereby update the first correspondence relationship more conveniently.

Alternatively the resource parameter configuration identifier is a specific resource identifier, or a resource parameter configuration indicator.

Alternatively before the network-side device determines the resource parameter configuration information corresponding to the resource parameter configuration identifier for the user equipment, the method further includes:
receiving, by the network-side device, the resource parameter configuration identifier from the user equipment, or the resource parameter configuration identifier for the user equipment from an MME managing the user equipment.

The network-side device can receive the resource parameter configuration identifier for the user equipment, from the user equipment, or from the MME managing the user equipment, to thereby improve the performance of the system.

Alternatively before the network-side device receives the resource parameter configuration identifier for the user equipment from the MME managing the user equipment, the method further includes:
transmitting, by a Serving Gateway (SGW) going to transmit data to the user equipment, a specific resource identifier corresponding to a bearer for transmitting the data, to the MME; and
if the resource parameter configuration identifier is a specific resource identifier, then forwarding, by the MME, the received specific resource identifier to the network-side device; if the resource parameter configuration identifier is a resource parameter configuration indicator, then determining, by the MME, a resource parameter configuration indicator corresponding to the received specific resource identifier according to a second correspondence relationship between the resource parameter configuration indicator and the specific resource identifier, and transmitting the determined resource parameter configuration indicator to the network-side device.

The MME can transmit the determined resource parameter configuration indicator to the network-side device so that the network-side device need not store the second correspondence relationship to thereby save storage resources of the network-side device.

Alternatively before the network-side device determines the resource parameter configuration information corresponding to the resource parameter configuration identifier for the user equipment, the method further includes:
transmitting, by a Serving Gateway (SGW) going to transmit data to the user equipment, a specific resource identifier corresponding to a bearer for transmitting the data, to a Mobility Management Entity (MME); and
if the resource parameter configuration identifier is a resource parameter configuration indicator, then forwarding, by the MME, a received specific resource identifier to the network-side device; and
determining, by the network-side device, the resource parameter configuration indicator corresponding to the received specific resource identifier according to a second correspondence relationship between the resource parameter configuration indicator and the specific resource identifier.

The network-side device can determine the resource parameter configuration indicator according to the second correspondence relationship to thereby be applicable to more application scenarios so as to satisfy demands of different user equipments.

Alternatively before the network-side device receives the resource parameter configuration identifier for the user equipment from the user equipment, the method further includes:
if the resource parameter configuration identifier is a resource parameter configuration indicator, then transmitting, by the network-side device, the resource parameter configuration indicator to the user equipment when configuring a specific resource identifier to the user equipment, so that the user equipment creates a second correspondence relationship between the resource parameter configuration indicator and the specific resource identifier.

When the network-side device configures the user equipment with the specific resource identifier, the network-side device transmits the resource parameter configuration indicator to the user equipment so that the network-side device need not store the second correspondence relationship to thereby save storage resources of the network-side device.

Alternatively before the network-side device determines the resource parameter configuration information corresponding to the resource parameter configuration identifier for the user equipment, the method further includes:
if the resource parameter configuration identifier is a resource parameter configuration indicator, then determining, by the network-side device, the resource parameter configuration indicator corresponding to a received specific resource identifier from the user equipment according to a second correspondence relationship between the resource parameter configuration indicator and the specific resource identifier.

The network-side device can determine the resource parameter configuration indicator according to the second correspondence relationship to thereby be applicable to more application scenarios so as to satisfy demands of different user equipments.

An embodiment of the invention provides another method for configuring a bearer, the method including:
determining, by a user equipment, a resource parameter configuration identifier corresponding to a bearer; and
transmitting, by the user equipment, the resource parameter configuration identifier to a network-side device so that the network-side device determines resource parameter configuration information corresponding to the received resource parameter configuration identifier according to a first correspondence relationship between the resource parameter configuration identifier and the resource parameter configuration information, and configures the user equipment with the bearer according to the determined resource parameter configuration information.

The user equipment transmits the resource parameter configuration identifier to the network-side device according to the embodiment of the invention, so that the network-side device setting up for the UE the bearer corresponding to the resource identifier can know the resource parameter configuration corresponding to the resource identifier to thereby configure the UE with the bearer corresponding to the resource identifier so as to improve the performance of the system.

Alternatively the resource parameter configuration identifier is a specific resource identifier, or a resource parameter configuration indicator.

Alternatively the resource parameter configuration identifier is a resource parameter configuration indicator; and
before the user equipment determines the resource parameter configuration identifier corresponding to the bearer, the method further includes:
when the network-side device configures the user equipment with a specific resource identifier, receiving, by the user equipment, a resource parameter configuration indicator from the network-side device, and creating a second correspondence relationship between the resource parameter configuration indicator and the specific resource identifier; and
determining, by the user equipment, the resource parameter configuration identifier corresponding to the bearer includes:
   determining, by the user equipment, the resource parameter configuration indicator corresponding to the specific resource identifier of the bearer according to the second correspondence relationship.

When the network-side device configures the user equipment with the specific resource identifier, the network-side device transmits the resource parameter configuration indicator to the user equipment, so that the network-side device need not store the second correspondence relationship to thereby save storage resources of the network-side device.

An embodiment of the invention provides a network-side device for configuring a bearer, the network-side device including:
a first determining module configured to determine resource parameter configuration information corresponding to a resource parameter configuration identifier for a user equipment according to a first correspondence relationship between the resource parameter configuration identifier and the resource parameter configuration information; and
a configuring module configured to configure the user equipment with a bearer according to the determined resource parameter configuration information.

Alternatively the first determining module is further configured:
to receive and store the first correspondence relationship from an OAM device or an MME before the resource parameter configuration information corresponding to the resource parameter configuration identifier for the user equipment is determined.

The network-side device can receive the first correspondence relationship from the OAM device or the MME to thereby update the first correspondence relationship more conveniently.

Alternatively the resource parameter configuration identifier is a specific resource identifier, or a resource parameter configuration indicator.

Alternatively the first determining module is further configured:
to receive the resource parameter configuration identifier for the user equipment, from the user equipment, or an MME managing the user equipment before the resource parameter configuration information corresponding to the resource parameter configuration identifier for the user equipment is determined.

The network-side device can receive the resource parameter configuration identifier from the user equipment, or the resource parameter configuration identifier for the user equipment from the MME managing the user equipment to thereby improve the performance of the system.

Alternatively the first determining module is further configured:
if the resource parameter configuration identifier is a resource parameter configuration indicator, to determine the resource parameter configuration indicator corresponding to a received specific resource identifier according to a second correspondence relationship between the resource parameter configuration indicator and the specific resource identifier before the resource parameter configuration information corresponding to the resource parameter configuration identifier for the user equipment is determined, and after the specific resource identifier forwarded from an MME is received.

The network-side device can determine the resource parameter configuration indicator according to the second correspondence relationship to thereby be applicable to more application scenarios so as to satisfy demands of different user equipments.

Alternatively the first determining module is further configured:
if the resource parameter configuration identifier is a resource parameter configuration indicator, to transmit the resource parameter configuration indicator to the user equipment when configuring a specific resource identifier to the user equipment, so that the user equipment creates a second correspondence relationship between the resource parameter configuration indicator and the specific resource identifier.

When the network-side device configures the user equipment with the specific resource identifier, the network-side device transmits the resource parameter configuration indicator to the user equipment, so that the network-side device need not store the second correspondence relationship to thereby save storage resources of the network-side device.

Alternatively the first determining module is further configured:
if the resource parameter configuration identifier is a resource parameter configuration indicator, to determine the resource parameter configuration indicator corresponding to a received specific resource identifier from the user equipment according to a second correspondence relationship between the resource parameter configuration indicator and the specific resource identifier before the resource parameter configuration information corresponding to the resource parameter configuration identifier for the user equipment is determined, and after the specific resource identifier from the user equipment is received.

The network-side device can determine the resource parameter configuration indicator according to the second correspondence relationship to thereby be applicable to more application scenarios so as to satisfy demands of different user equipments.

An embodiment of the invention provides a user equipment for configuring a bearer, the user equipment including:
a second determining module configured to determine a resource parameter configuration identifier corresponding to a bearer; and
a transmitting module configured to transmit the resource parameter configuration identifier to a network-side device so that the network-side device determines resource parameter configuration information corresponding to the received resource parameter configuration identifier according to a first correspondence relationship between the resource parameter configuration identifier and the resource parameter configuration information, and configures the user equipment with the bearer according to the determined resource parameter configuration information.

The user equipment transmits the resource parameter configuration identifier to the network-side device according to the embodiment of the invention, so that the network-side device setting up for the UE the bearer corresponding to the resource identifier can know the resource parameter configuration corresponding to the resource identifier to thereby configure the UE with the bearer corresponding to the resource identifier so as to improve the performance of the system.

Alternatively the resource parameter configuration identifier is a specific resource identifier, or a resource parameter configuration indicator.

Alternatively the resource parameter configuration identifier is the resource parameter configuration indicator; and
the second determining module is configured:
when the network-side device configures the user equipment with the specific resource identifier, to receive a resource parameter configuration indicator from the network-side device, and to create a second correspondence relationship between the resource parameter configuration indicator and the specific resource identifier; and to determine the resource parameter configuration indicator corresponding to the specific resource identifier of the bearer according to the second correspondence relationship.

When the network-side device configures the user equipment with the specific resource identifier, the network-side device transmits the resource parameter configuration indicator to the user equipment, so that the network-side device need not store the second correspondence relationship to thereby save storage resources of the network-side device.

### Brief Description of the Drawings

Fig.1 is a schematic flow chart of a method for configuring a bearer by a network-side device according to an embodiment of the invention;
Fig.2 is a schematic flow chart of a method for instructing by a user equipment to configure a bearer, according to an embodiment of the invention;
Fig.3 is a schematic flow chart of a Mobile Originating (MO) process according to an embodiment of the invention;
Fig.4 is a schematic flow chart of a Mobile Terminating (MT) process according to an embodiment of the invention;
Fig.5 is a schematic flow chart of a parallel MO process according to an embodiment of the invention;
Fig.6 is a schematic flow chart of a parallel MT process according to an embodiment of the invention;

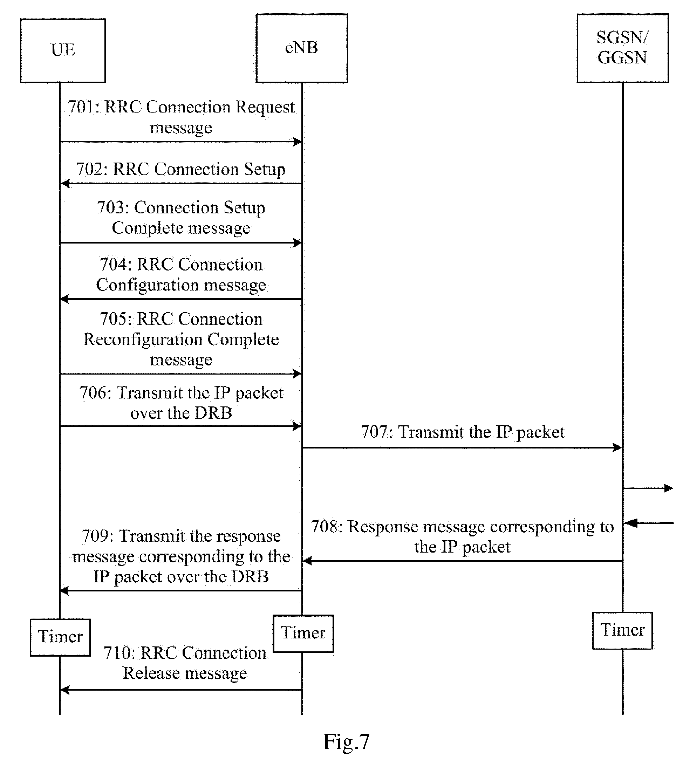

Fig.7 is a schematic flow chart of an MO process in a Universal Mobile Telecommunication System (UMTS) according to an embodiment of the invention;
Fig.8 is a schematic structural diagram of a first network-side device according to an embodiment of the invention;
Fig.9 is a schematic structural diagram of a first user equipment according to an embodiment of the invention;
Fig.10 is a schematic structural diagram of a second network-side device according to an embodiment of the invention;
Fig.11 is a schematic structural diagram of a second user equipment according to an embodiment of the invention.

### Detailed Description of the Embodiments

The network-side device according to embodiments of the invention determines resource parameter configuration information corresponding to a resource parameter configuration identifier for a user equipment according to a first correspondence relationship between the resource parameter configuration identifier and the resource parameter configuration information, so that the network-side device according to the embodiments of the invention setting up for the UE a bearer corresponding to a specific resource identifier can know the resource parameter configuration corresponding to the specific resource identifier to thereby configure the UE with the bearer corresponding to the specific resource identifier so as to improve the performance of the system.

Here the bearer in the embodiments of the invention includes but will not be limited to a bearer to be set up, or a bearer to be activated.

The resource parameter configuration identifier in the embodiments of the invention is a specific resource identifier, or a resource parameter configuration indicator.

Here the specific resource identifier includes but will not be limited to a Quality of Service (QoS) identifier, a resource request identifier, a resource reservation identifier, and a resource configuration identifier.

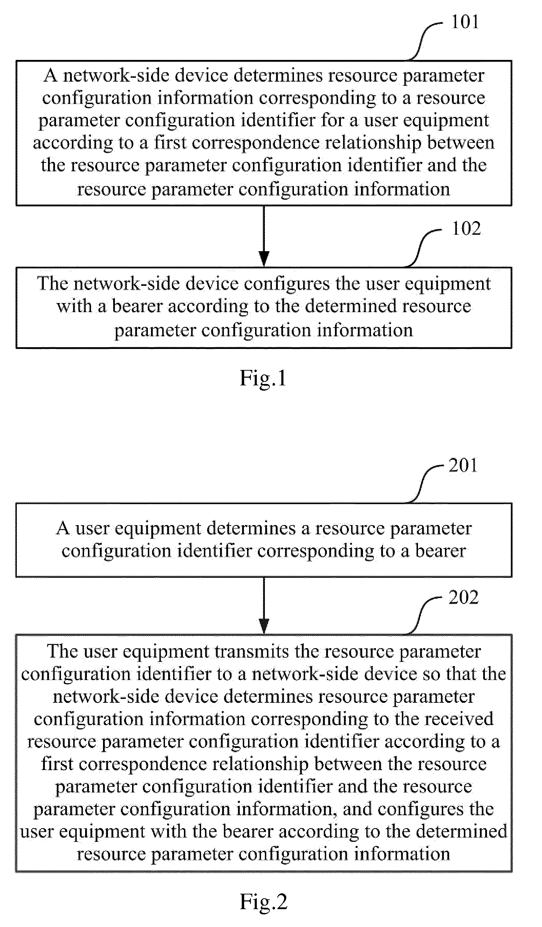

As illustrated in Fig.1, a method for configuring a bearer by a network-side device according to an embodiment of the invention includes:
In the operation 101, a network-side device determines resource parameter configuration information corresponding to a resource parameter configuration identifier for a user equipment according to a first correspondence relationship between the resource parameter configuration identifier and the resource parameter configuration information; and
In the operation 102, the network-side device configures the user equipment with a bearer according to the determined resource parameter configuration information.

Here the first correspondence relationship between the resource parameter configuration identifier and the resource parameter configuration information, and a second correspondence relationship, as referred to below, between a resource parameter configuration indicator and a specific resource identifier can be specified in a protocol; or can be preconfigured in the network-side device; or can be configured by a higher layer; or can be determined as a result of negotiation between different network-side devices; or can be determined as a result of negotiation between the network-side device and the user equipment.

In an implementation, if the correspondence relationships are configured by the higher layer, then the higher layer here includes but will not be limited to:
An Operation and Maintenance (OAM) device and an MME.

Particularly the network-side device receives and stores the first correspondence relationship from the OAM device or the MME.

Alternatively the resource parameter configuration identifier is a specific resource identifier, or a resource parameter configuration indicator.

Here the resource parameter configuration indicator in the embodiment of the invention is a specific resource identifier, or a resource parameter configuration indicator.

The resource parameter configuration indicator can be a part of information in the specific resource identifier; or can be new information.

The specific resource identifier in the embodiment of the invention can be used for addressing by an eNB to locate an SGW corresponding to a core network, which determines a bearer/connection corresponding to the core network.

The resource parameter configuration indicator in the embodiment of the invention indicates a resource configuration requirement corresponding to the bearer/connection of the core network so that the network-side device setting up a Data Radio Bearer (DRB) corresponding to the bearer of the core network for the UE can configure a corresponding resource according to the resource configuration requirement corresponding to the resource parameter configuration indicator, where the resource configuration requirement includes a QoS requirement, etc.
I. The resource parameter configuration identifier is a specific resource identifier.
   1. The user equipment initiates data transmission actively.
      Particularly the user equipment going to transmit data transmits a specific resource identifier of the bearer corresponding to the data to the network-side device; and
      The network-side device determines the resource parameter configuration information corresponding to the specific resource identifier according to the first correspondence relationship, and configures the UE with a bearer according to the determined resource parameter configuration information.
   2. The network side initiates data transmission actively.
      The SGW going to transmit data to the UE transmits a specific resource identifier corresponding to a bearer over which the data will be transmitted, to the MME;
      The MME forwards the received specific resource identifier to the network-side device; and
      The network-side device determines the resource parameter configuration information corresponding to the specific resource identifier according to the first correspondence relationship, and configures the UE with the bearer according to the determined resource parameter configuration information.
II. The resource parameter configuration identifier is a resource parameter configuration indicator.
   1. The user equipment initiates data transmission actively.
      Particularly the user equipment going to transmit data determines a resource parameter configuration indicator corresponding to the specific resource identifier of the bearer corresponding to the data to be transmitted according to the second correspondence relationship between the resource parameter configuration indicator and the specific resource identifier, and transmits the resource parameter configuration indicator to the network-side device; and
      The network-side device determines the resource parameter configuration information corresponding to the resource parameter configuration indicator according to the first correspondence relationship, and configures the UE with the bearer according to the determined resource parameter configuration information.
      Alternatively the network-side device can transmit the second correspondence relationship to the user equipment.
      Or
      The user equipment going to transmit data transmits the specific resource identifier of the bearer corresponding to the data; and
      Correspondingly the network-side device determines the resource parameter configuration indicator corresponding to the received specific resource identifier from the user equipment according to the second correspondence relationship between the resource parameter configuration indicator and the specific resource identifier.
   2. The network side initiates data transmission actively.
      In a first approach, the SGW going to transmit data to the UE transmits the specific resource identifier corresponding to the bearer over which the data will be transmitted, to the MME;
      The MME forwards the specific resource identifier to the network-side device; and
      The network-side device determines the resource parameter configuration indicator corresponding to the received specific resource identifier according to the second correspondence relationship between the resource parameter configuration indicator and the specific resource identifier; and determines the resource parameter configuration information corresponding to the resource parameter configuration indicator according to the first correspondence relationship, and configures the user equipment with the bearer according to the determined resource parameter configuration information.

In a second approach, the SGW going to transmit data to the UE transmits the specific resource identifier corresponding to the bearer over which the data will be transmitted, to the MME;
The MME determines the resource parameter configuration indicator corresponding to the received specific resource identifier according to the second correspondence relationship between the resource parameter configuration indicator and the specific resource identifier, and transmits the resource parameter configuration indicator to the network-side device; and
The network-side device determines the resource parameter configuration information corresponding to the resource parameter configuration indicator according to the first correspondence relationship, and configures the user equipment with the bearer according to the determined resource parameter configuration information.

Here the data in the embodiment of the invention can be an IP packet (where the IP packet refers to a packet transmitted with a small amount of data at a long interval); or can be any other packet.

Here the network-side device according to the embodiment of the invention can be a base station (e.g., a macro base station, a home base station, etc.), or can be a Relay Node (RN) device, or can be another network-side device.

In a particular implementation, the base station in the embodiment of the invention can be a Base Transceiver Station (BTS), a Node B, an evolved Node B (eNode B or eNB), a Home Node B (HNB), a Home evolved NodeB (HeNB), a Relay Node (RN), a wireless Access Point (AP), a wireless router, or the like. The base station provides wireless signal coverage in a specific area using a single or multiple antennas, where the specific area is referred to as a cell. This concept of a cell also frequently refers to a logic entity, including software and hardware sub-systems of the base station, to serve the user equipment in the specific coverage area. One base station can be associated with one cell, and the cell can be further divided into sectors, where the base station can be associated with a plurality of sectors.

The base station can alternatively be embodied as Base Band Units (BBUs) and Remote Radio Heads (RRHs) separate from the BBUs, where signals can be transmitted between the BBUs and the RRHs over a long distance through optical fibers, and at this time the BBUs can be arranged centrally to thereby support the C-RAN architecture which is further embodied as a general processor platform with cloud computing.

As illustrated in Fig.2, a method for instructing by a user equipment to configure a bearer according to an embodiment of the invention includes:
In the operation 201, a user equipment determines a resource parameter configuration identifier corresponding to a bearer; and
In the operation 202, the user equipment transmits the resource parameter configuration identifier to a network-side device so that the network-side device determines resource parameter configuration information corresponding to the received resource parameter configuration identifier according to a first correspondence relationship between the resource parameter configuration identifier and the resource parameter configuration information, and configures the user equipment with the bearer according to the determined resource parameter configuration information.

Alternatively the resource parameter configuration identifier is a specific resource identifier, or a resource parameter configuration indicator.

If the resource parameter configuration identifier is the resource parameter configuration indicator, then:
Before the user equipment determines the resource parameter configuration identifier corresponding to the bearer, the method further includes:
   If the network-side device configures the user equipment with the specific resource identifier, then the user equipment receives the resource parameter configuration indicator from the network-side device, and creates a second correspondence relationship between the resource parameter configuration indicator and the specific resource identifier; and
   The user equipment determines the resource parameter configuration identifier corresponding to the bearer as follows:
      The user equipment determines the resource parameter configuration indicator corresponding to the specific resource identifier of the bearer according to the second correspondence relationship.

In a particular implementation, the user equipment according to the embodiment of the invention can be a handset, a tablet computer, a notebook computer, a data card, a netbook computer, a smart watch, a wireless wideband hotspot router (MiFi), and products, including a digital camera, a smart electric meter, a home appliance, etc., capable of wireless communication. The user equipment can communicate wirelessly with different base stations using one or several wireless access technologies.

The solution according to the invention will be described in connection with several different scenarios listed below.

In a first example, an initial configuration need to be made prior to an MO process according to the embodiment of the invention:
1. The eNB obtains through the OAM device a QoS configuration for transmission of an IP packet; or
2. When allocating a resource identifier to the UE, the MME transmits a QoS identifier (i.e., a resource parameter configuration identifier) and a QoS configuration corresponding to the resource identifier to the eNB; and when allocating the resource identifier to the UE side, the eNB notifies the UE of the QoS identifier and the QoS configuration corresponding to the resource identifier.

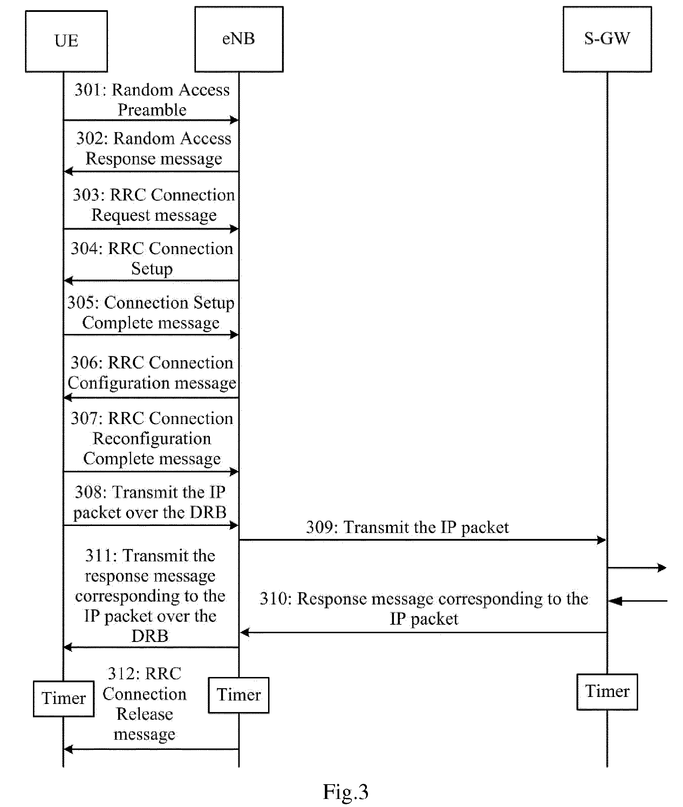

Referring to Fig.3, an MO activating bearer process includes the following operations:

In the operation 301, the UE transmits a Random Access Preamble to the eNB.

In the operation 302, the eNB returns a Random Access Response message to the UE.

In the operation 303, the UE transmits an RRC Connection Request message to the eNB.

In the operation 304, the eNB returns an RRC Connection Setup message to the UE.

The operation 301 to the operation 304 relates to the random access procedure initiated if the UE has an uplink IP packet to be transmitted.

In the operation 305, after an RRC connection is set up, the UE transmits a Connection Setup Complete message to the eNB, and transmits a resource identifier of the core network side of the UE and a QoS identifier (the QoS identifier here is a resource parameter configuration identifier) to the eNB in the Connection Setup Complete message, according to a bearer of the core network side for the uplink IP packet to be transmitted by the UE.

In the operation 306, the eNB determines the SGW to which the IP packet is transmitted by the UE, according to the resource identifier of the core network side of the UE, configures a specific DRB with a QoS configuration corresponding to the QoS identifier, creates a correspondence relationship between the DRB and the bearer of the core network side, and transmits an RRC Connection Reconfiguration message including the resource identifier and a DRB identifier to the UE.

The DRB identifier here identifies the bearer of the access network, and the resource identifier identifies the bearer of the core network.

The eNB can create a correspondence relationship between the resource identifier and the DRB so that the UE transmitting the uplink data can simply transmit the data over the corresponding DRB without transmitting the resource identifier (which is only used for addressing by the eNB to locate the corresponding SGW) each time the UE transmits data, thus the eNB can know that the data received over the DRB shall be forwarded to the corresponding SGW.

In the operation 307, the UE transmits an RRC Connection Reconfiguration Complete message to the eNB.

In the operation 308, the UE transmits the IP packet to the eNB over the activated bearer with the specific QoS.

In the operation 309, the eNB transmits the IP packet to the SGW over the activated bearer with the specific QoS.

In the operation 310, the SGW returns a response message corresponding to the IP packet to the eNB over the activated bearer with the specific QoS.

In the operation 311, the eNB returns the response message corresponding to the IP packet to the UE over the activated bearer with the specific QoS.

In the operation 307 to the operation 311, the UE sets up the DRB, and the eNB schedules transmission of the specific IP packet of the UE over the DRB according to the corresponding QoS configuration.

In the operation 312, all of the UE, the eNB, and the SGW start a timer (Timeout of Fast Path) each time the IP packet is transmitted, where the bearer is active before the timer expires, and if the timer expires, then the corresponding bearer will be deactivated. The eNB can transmit an RRC Connection Release message to the UE to release the RRC connection of the UE.

If a PDN connection is set up in advance between the UE and the core network side, then a correspondence relationship between the bearer and the QoS can be created using a Connection ID and the QoS identifier; and the QoS identifier can also be sent in the RRC Connection Setup Request message, and the DRB configuration for the UE can be transmitted in the RRC Connection Setup message. Other parameters than the QoS can also be configured similarly, so a repeated description thereof will be omitted here.

In a second example, an initial configuration need to be made prior to an MT process according to the embodiment of the invention:
1. The eNB obtains through the OAM device a QoS configuration for transmission of a IP packet; or
2. When allocating a resource identifier to the UE, the MME transmits a QoS identifier (i.e., a resource parameter configuration identifier) and a QoS configuration corresponding to the resource identifier to the eNB; and when allocating the resource identifier to the UE side, the eNB notifies the UE of the QoS identifier and the QoS configuration corresponding to the resource identifier.

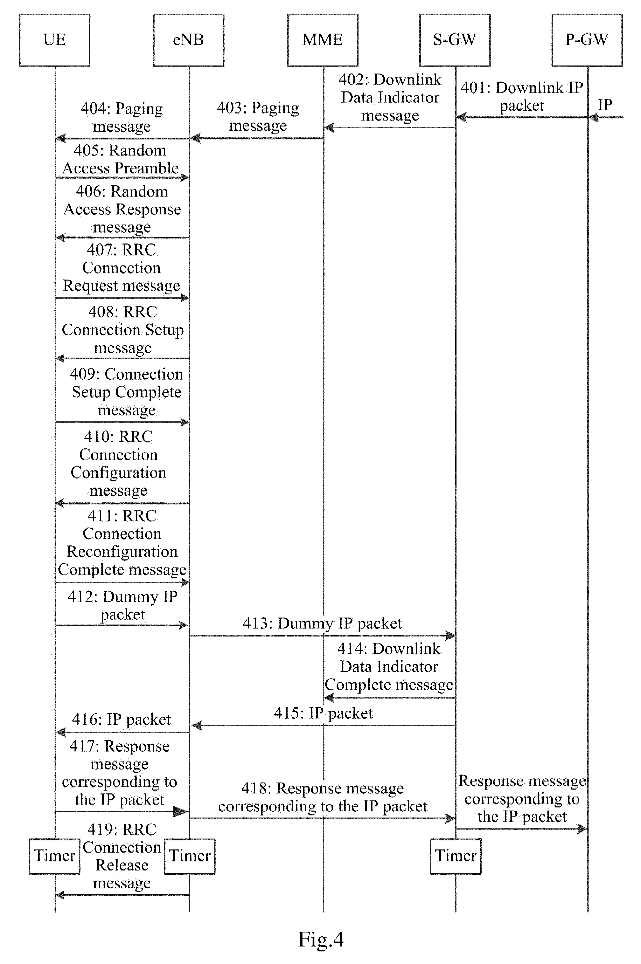

Referring to Fig.4, an MT activating bearer process includes the following operations:

In the operation 401, the SGW receives a downlink IP packet for the UE, from the PGW.

In the operation 402, the SGW transmits a Downlink Data Indicator (DDN) message including a resource identifier of a bearer to the MME for the MME to call the UE.

In the operation 403, the MME transmits a paging message including the resource identifier of the bearer to the eNB.

In the operation 404, the eNB transmits a paging message including the resource identifier of the bearer to the eNB.

In the operation 405, the UE transmits a Random Access Preamble to the eNB.

In the operation 406, the eNB returns a Random Access Response message to the UE.

In the operation 407, the eNB returns an RRC Connection Setup message to the UE.

In the operation 408, the eNB returns an RRC Connection Setup message to the UE.

In the operation 405 to the operation 408, the random access procedure is initiated by the UE receiving paging of the IP packet.

In the operation 409, after an RRC connection is set up, the UE transmits a Connection Setup Complete message to the eNB, and transmits a resource identifier of the core network side of the UE and a QoS identifier (the QoS identifier here is a resource parameter configuration identifier) to the eNB in the Connection Setup Complete message, according to a bearer of the core network side for the uplink IP packet to be transmitted by the UE.

In the operation 410, the eNB determines the SGW to which the IP packet is transmitted by the UE, according to the resource identifier of the core network side of the UE, configures a specific Data Radio Bearer (DRB) with a QoS configuration corresponding to the QoS identifier, creates a correspondence relationship between the DRB and the bearer of the core network side, and transmits an RRC Connection Reconfiguration message including the resource identifier and a DRB identifier to the UE.

In the operation 411, the UE transmits an RRC Connection Reconfiguration Complete message to the eNB.

In the operation 412, the UE transmits a dummy IP packet to the eNB.

In the operation 413, the eNB transmits a dummy IP packet to the SGW to activate transmission of the downlink IP packet.

Here a dummy IP packet can alternatively be transmitted directly by the eNB instead of the UE to the SGW.

In the operation 414, the SGW activates the bearer, and transmits a Downlink Data Indicator (DDN) Complete message to the MME, upon reception of the dummy IP packet.

In the operation 415, the SGW transmits the IP packet to the eNB over the activated bearer with the specific QoS.

In the operation 416, the eNB transmits the IP packet to the UE over the activated bearer with the specific QoS.

In the operation 417, the UE returns a response message corresponding to the IP packet to the eNB over the activated bearer with the specific QoS.

In the operation 418, the eNB returns a response message corresponding to the IP packet to the SGW over the activated bearer with the specific QoS.

In the operation 415 to the operation 418, the UE and the SGW transmit and receive the IP packet over the activated bearer with the specific QoS.

In the operation 419, all of the UE, the eNB, and the SGW start a timer (Timeout of Fast Path) each time the IP packet is transmitted, where the bearer is active before the timer expires, and if the timer expires, then the corresponding bearer will be deactivated. The eNB can transmit an RRC Connection Release message to the UE to release the RRC connection of the UE.

If a PDN connection is set up in advance between the UE and the core network side, then a correspondence relationship between the bearer and the QoS can be created using a Connection ID and the QoS identifier; and the QoS identifier can also be sent in the RRC Connection Setup Request message, and the DRB configuration for the UE can be transmitted in the RRC Connection Setup message. Other parameters than the QoS can also be configured similarly, so a repeated description thereof will be omitted here.

In a third example, since there may be a plurality of bearers of the core network which are set up in advance for the UE, the UE may initiate transmission of an MO IP packet for a new bearer of the core network which is set up in advance, after the UE creates the correspondence relationship between some bearer of the core network, and the DRB in the first or second example. In this case, the UE may create a correspondence relationship between a new DRB, and the bearer of the core network which is set up in advance, to transmit an IP packet. A flow thereof will be described as follows.

An initial configuration need to be made prior to an MT process according to the embodiment of the invention:
1. The eNB obtains through the OAM device a QoS configuration for transmission of an IP packet; or
2. When allocating a resource identifier to the UE, the MME transmits a QoS identifier (i.e., a resource parameter configuration identifier) and a QoS configuration corresponding to the resource identifier to the eNB; and when allocating the resource identifier to the UE side, the eNB notifies the UE of the QoS identifier and the QoS configuration corresponding to the resource identifier.

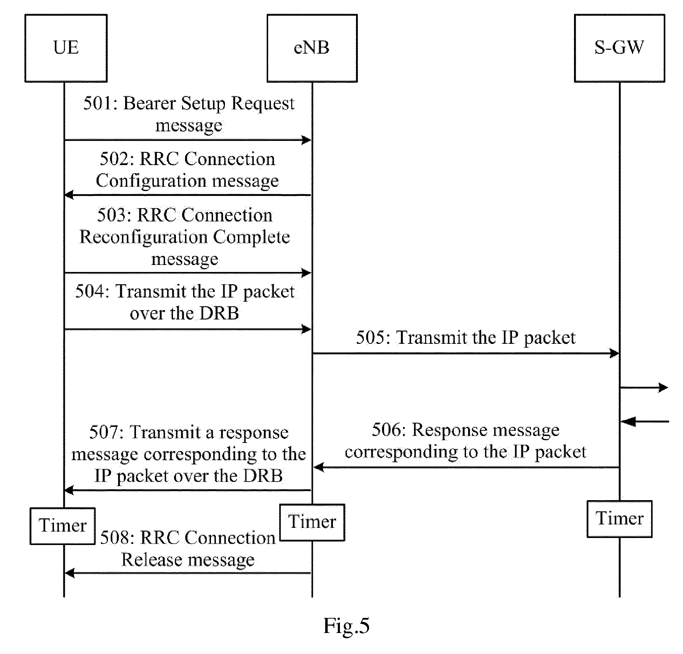

Referring to Fig.5, a parallel MO activating bearer process includes the following operations:
In the operation 501, after the UE has set up a DRB for some resource identifier, if the UE has a request to transmit an IP packet for another resource identifier, then the UE can transmit the resource identifier and a QoS indicator to the eNB in a new Bearer Setup Request message.

In the operation 502, the eNB determines the SGW to which the IP packet is transmitted by the UE, according to the resource identifier of the core network side of the UE, configures a specific DRB with the QoS configuration corresponding to the QoS identifier, creates a correspondence relationship between the DRB and the bearer of the core network side, and transmits an RRC Connection Reconfiguration message including the resource identifier and a DRB identifier to the UE.

The DRB identifier here identifies the bearer of the access network, and the resource identifier identifies the bearer of the core network.

The eNB can create a correspondence relationship between the resource identifier and the DRB so that the UE transmitting the uplink data can simply transmit the data over the corresponding DRB without transmitting the resource identifier (which is only used for addressing by the eNB to locate the corresponding SGW) each time the UE transmits data, thus the eNB can know that the data received over the DRB shall be forwarded to the corresponding SGW.

In the operation 503, the UE transmits an RRC Connection Reconfiguration Complete message to the eNB.

In the operation 504, the UE transmits the IP packet to the eNB over the activated bearer with the specific QoS.

In the operation 505, the eNB transmits the IP packet to the SGW over the activated bearer with the specific QoS.

In the operation 506, the SGW returns a response message corresponding to the IP packet to the eNB over the activated bearer with the specific QoS.

In the operation 507, the eNB returns the response message corresponding to the IP packet to the UE over the activated bearer with the specific QoS.

In the operation 503 to the operation 507, the UE sets up the DRB, and the eNB schedules transmission of the specific IP packet of the UE over the DRB according to the corresponding QoS configuration.

In the operation 508, all of the UE, the eNB, and the SGW start a timer (Timeout of Fast Path) each time the IP packet is transmitted, where the bearer is active before the timer expires, and if the timer expires, then the corresponding bearer will be deactivated. The eNB can transmit an RRC Connection Release message to the UE to release the RRC connection of the UE.

If a PDN connection is set up in advance between the UE and the core network side, then a correspondence relationship between the bearer and the QoS can be created using a Connection ID and the QoS identifier. The QoS identifier can alternatively be reported to the network in existing RRC signaling, e.g., User Equipment (UE) Assistance Information. Other parameters than the QoS can also be configured similarly, so a repeated description thereof will be omitted here.

In a fourth example, since there may be a plurality of bearers of the core network which are set up in advance for the UE, the UE may initiate transmission of an MT IP packet for a new bearer of the core network which is set up in advance, after the UE creates the correspondence relationship between some bearer of the core network, and the DRB in the first or second example. In this case, the UE may create a correspondence relationship between a new DRB, and the bearer of the core network which is set up in advance, to transmit an IP packet. A flow thereof will be described as follows.

An initial configuration need to be made prior to an MT process according to the embodiment of the invention:
1. The eNB obtains through the OAM device a QoS configuration for transmission of an IP packet; or
2. When allocating a resource identifier to the UE, the MME transmits a QoS identifier (i.e., a resource parameter configuration identifier) and a QoS configuration corresponding to the resource identifier to the eNB; and when allocating the resource identifier to the UE side, the eNB notifies the UE of the QoS identifier and the QoS configuration corresponding to the resource identifier. The MME and the SGW obtain and store the QoS identifier and the QoS configuration corresponding to the resource identifier when allocating the resource identifier for the UE.

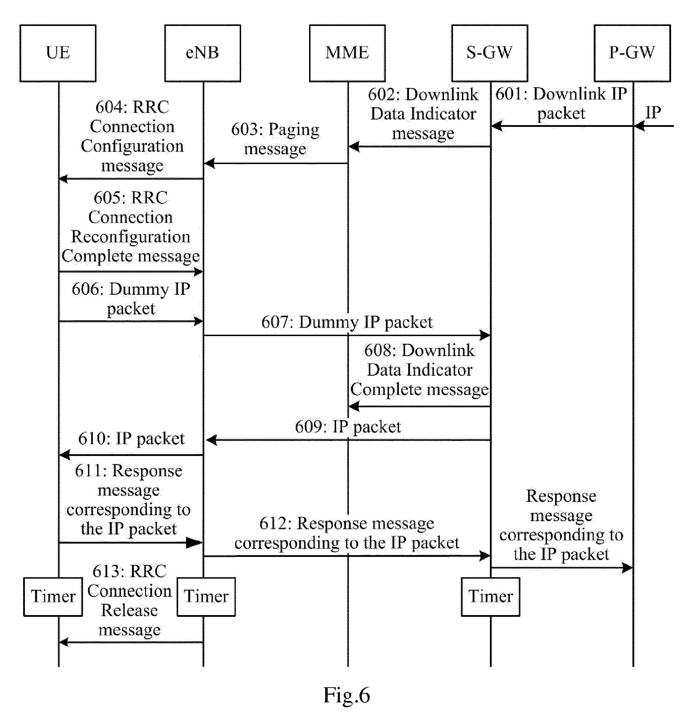

Referring to Fig.6, a parallel MT activating bearer process includes the following operations:
In the operation 601, the SGW receives a downlink IP packet for the UE, from the PGW.

In the operation 602, the SGW transmits a Downlink Data Indicator (DDN) message including a resource identifier of a bearer to the MME for the MME to call the UE.

In the operation 603, the MME transmits a paging message including the resource identifier of the bearer to the eNB.

In the operation 604, the eNB determines the SGW to which the IP packet is transmitted by the UE, according to the resource identifier of the core network side of the UE, configures a specific DRB with a QoS configuration corresponding to the QoS identifier, creates a correspondence relationship between the DRB and the bearer of the core network side, and transmits an RRC Connection Reconfiguration message including the resource identifier and a DRB identifier to the UE.

In the operation 605, the UE transmits an RRC Connection Reconfiguration Complete message to the eNB.

In the operation 606, the UE transmits a dummy IP packet to the eNB.

In the operation 607, the eNB transmits a dummy IP packet to the SGW to activate transmission of the downlink IP packet.

Here a dummy IP packet can alternatively be transmitted directly by the eNB instead of the UE to the SGW.

In the operation 608, the SGW activates the bearer, and transmits a Downlink Data Indicator (DDN) Complete message to the MME, upon reception of the dummy IP packet.

In the operation 609, the SGW transmits the IP packet to the eNB over the activated bearer with the specific QoS.

In the operation 610, the eNB transmits the IP packet to the UE over the activated bearer with the specific QoS.

In the operation 611, the UE returns a response message corresponding to the IP packet to the eNB over the activated bearer with the specific QoS.

In the operation 612, the eNB returns a response message corresponding to the IP packet to the SGW over the activated bearer with the specific QoS.

In the operation 609 to the operation 612, the UE and the SGW transmit and receive the IP packet over the activated bearer with the specific QoS.

In the operation 613, all of the UE, the eNB, and the SGW start a timer (Timeout of Fast Path) each time the IP packet is transmitted, where the bearer is active before the timer expires, and if the timer expires, then the corresponding bearer will be deactivated. The eNB can transmit an RRC Connection Release message to the UE to release the RRC connection of the UE.

If a PDN connection is set up in advance between the UE and the core network side, then the UE and the eNB may create a correspondence between the DRB and the PDN connection, and the corresponding QoS configuration. Other parameters than the QoS can also be configured similarly, so a repeated description thereof will be omitted here.

In a fifth example, An initial configuration need to be made prior to an MO process in a UMTS system according to the embodiment of the invention:
1. The eNB obtains through the OAM device a QoS configuration for transmission of an IP packet; or
2. When allocating a resource identifier to the UE, the MME transmits a QoS identifier (i.e., a resource parameter configuration identifier) and a QoS configuration corresponding to the resource identifier to the eNB; and when allocating the resource identifier to the UE side, the eNB notifies the UE of the QoS identifier and the QoS configuration corresponding to the resource identifier.

Referring to Fig.3, an MO activating bearer process includes the following operations:
In the operation 701, the UE transmits an RRC Connection Request message to the eNB.

In the operation 702, the eNB returns an RRC Connection Setup message to the UE.

In the operation 703, after an RRC connection is set up, the UE transmits a Connection Setup Complete message to the eNB by transmitting a resource identifier of the core network side of the UE and a QoS identifier (the QoS identifier here is a resource parameter configuration identifier) to the eNB in the Connection Setup Complete message, according to a bearer of the core network side for the uplink IP packet to be transmitted by the UE.

In the operation 704, the eNB determines the SGW to which the IP packet is transmitted by the UE, according to the resource identifier of the core network side of the UE, configures a specific DRB with a QoS configuration corresponding to the QoS identifier, creates a correspondence relationship between the DRB and the bearer of the core network side, and transmits an RRC Connection Reconfiguration message including the resource identifier and a DRB identifier to the UE.

In the operation 705, the UE transmits an RRC Connection Reconfiguration Complete message to the eNB.

In the operation 706, the UE transmits the IP packet to the eNB over the activated bearer with the specific QoS.

In the operation 707, the eNB transmits the IP packet to a Serving GPRS Support Node (SGSN) and/or a Gateway GPRS Support Node (GGSN) over the activated bearer with the specific QoS.

In the operation 708, the SGSN/GGSN returns a response message corresponding to the IP packet to the eNB over the activated bearer with the specific QoS.

In the operation 709, the eNB returns the response message corresponding to the IP packet to the UE over the activated bearer with the specific QoS.

In the operation 710, all of the UE, the eNB, and the SGW start a timer (Timeout of Fast Path) each time the IP packet is transmitted, where the bearer is active before the timer expires, and if the timer expires, then the corresponding bearer will be deactivated. The eNB can transmit an RRC Connection Release message to the UE to release the RRC connection of the UE.

If a PDN connection is set up in advance between the UE and the core network side, then a correspondence relationship between the bearer and the QoS can be created using a Connection ID and the QoS identifier; and the QoS identifier can also be sent in the RRC Connection Setup Request message, and the DRB configuration for the UE can be transmitted in the RRC Connection Setup message. Other parameters than the QoS can also be configured similarly, so a repeated description thereof will be omitted here.

Based upon the same inventive idea, embodiments of the invention further provide a network-side device and a user equipment, and since these apparatuses address the problem under a similar principle to the embodiments of the invention according to the embodiments of the invention, reference can be made for implementations of these apparatuses for the implementations of the methods, so a repeated description thereof will be omitted here.

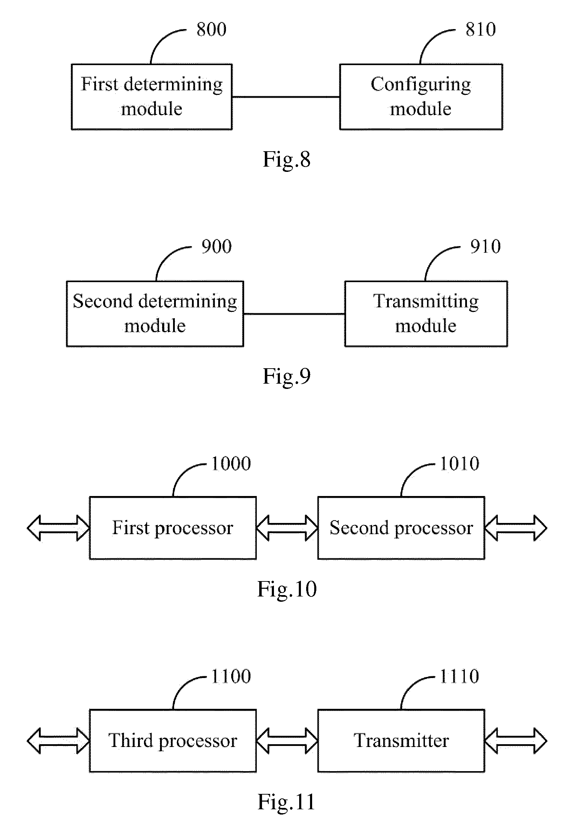

As illustrated in Fig.8, a first network-side device according to an embodiment of the invention includes a first determining module 800, and a configuring module 810.

The first determining module 800 is configured to determine resource parameter configuration information corresponding to a resource parameter configuration identifier for a user equipment according to a first correspondence relationship between the resource parameter configuration identifier and the resource parameter configuration information; and

The configuring module 810 is configured to configure the user equipment with a bearer according to the determined resource parameter configuration information.

Alternatively the first determining module 800 is further configured:
To receive and store the first correspondence relationship from an OAM device or an MME before the resource parameter configuration information corresponding to the resource parameter configuration identifier for the user equipment is determined.

Alternatively the resource parameter configuration identifier is a specific resource identifier, or a resource parameter configuration indicator.

Alternatively the first determining module 800 is further configured:
To receive the resource parameter configuration identifier for the user equipment, from the user equipment, or an MME managing the user equipment before the resource parameter configuration information corresponding to the resource parameter configuration identifier for the user equipment is determined.

Alternatively the first determining module 800 is further configured:
If the resource parameter configuration identifier is the resource parameter configuration indicator, to determine the resource parameter configuration indicator corresponding to a received specific resource identifier according to a second correspondence relationship between the resource parameter configuration indicator and the specific resource identifier before the resource parameter configuration information corresponding to the resource parameter configuration identifier for the user equipment is determined, and after the specific resource identifier forwarded from an MME is received.

Alternatively the first determining module 800 is further configured:
If the resource parameter configuration identifier is a resource parameter configuration indicator, to transmit the resource parameter configuration indicator to the user equipment when configuring a specific resource identifier to the user equipment, so that the user equipment creates a second correspondence relationship between the resource parameter configuration indicator and the specific resource identifier.

Alternatively the first determining module 800 is further configured:
If the resource parameter configuration identifier is the resource parameter configuration indicator, to determine the resource parameter configuration indicator corresponding to a received specific resource identifier from the user equipment according to a second correspondence relationship between the resource parameter configuration indicator and the specific resource identifier before the resource parameter configuration information corresponding to the resource parameter configuration identifier for the user equipment is determined, and after the specific resource identifier from the user equipment is received.

As illustrated in Fig.9, an embodiment of the invention provides a first user equipment including a second determining module 900, and a transmitting module 910.

The second determining module 900 is configured to determine a resource parameter configuration identifier corresponding to a bearer; and
The transmitting module 910 is configured to transmit the resource parameter configuration identifier to a network-side device so that the network-side device determines resource parameter configuration information corresponding to the received resource parameter configuration identifier according to a first correspondence relationship between the resource parameter configuration identifier and the resource parameter configuration information, and configures the user equipment with the bearer according to the determined resource parameter configuration information.

Alternatively the resource parameter configuration identifier is a specific resource identifier, or a resource parameter configuration indicator.

Alternatively the resource parameter configuration identifier is the resource parameter configuration indicator; and
The second determining module 900 is configured:
When the network-side device configures the user equipment with the specific resource identifier, to receive a resource parameter configuration indicator from the network-side device, and to create a second correspondence relationship between the resource parameter configuration indicator and the specific resource identifier; and to determine the resource parameter configuration indicator corresponding to the specific resource identifier of the bearer according to the second correspondence relationship.

As illustrated in Fig. 10, a second network-side device according to an embodiment of the invention includes a first processor 1000, and a second processor 1010.

The first processor 1000 is configured to determine resource parameter configuration information corresponding to a resource parameter configuration identifier for a user equipment according to a first correspondence relationship between the resource parameter configuration identifier and the resource parameter configuration information; and
The second processor 1010 is configured to configure the user equipment with a bearer according to the determined resource parameter configuration information.

Alternatively the first processor 1000 is further configured:
To receive and store the first correspondence relationship from an OAM device or an MME before the resource parameter configuration information corresponding to the resource parameter configuration identifier for the user equipment is determined.

Alternatively the resource parameter configuration identifier is a specific resource identifier, or a resource parameter configuration indicator.

Alternatively the first processor 1000 is further configured:
To receive the resource parameter configuration identifier for the user equipment, from the user equipment, or an MME managing the user equipment before the resource parameter configuration information corresponding to the resource parameter configuration identifier for the user equipment is determined.

Alternatively the first processor 1000 is further configured:
If the resource parameter configuration identifier is the resource parameter configuration indicator, to determine the resource parameter configuration indicator corresponding to a received specific resource identifier according to a second correspondence relationship between the resource parameter configuration indicator and the specific resource identifier before the resource parameter configuration information corresponding to the resource parameter configuration identifier for the user equipment is determined, and after the specific resource identifier forwarded from an MME is received.

Alternatively the first processor 1000 is further configured:
If the resource parameter configuration identifier is a resource parameter configuration indicator, to transmit the resource parameter configuration indicator to the user equipment when configuring a specific resource identifier to the user equipment, so that the user equipment creates a second correspondence relationship between the resource parameter configuration indicator and the specific resource identifier.

Alternatively the first processor 1000 is further configured:
If the resource parameter configuration identifier is the resource parameter configuration indicator, to determine the resource parameter configuration indicator corresponding to a received specific resource identifier from the user equipment according to a second correspondence relationship between the resource parameter configuration indicator and the specific resource identifier before the resource parameter configuration information corresponding to the resource parameter configuration identifier for the user equipment is determined, and after the specific resource identifier forwarded from an MME is received.

As illustrated in Fig. 11, an embodiment of the invention provides a second user equipment including a third processor 1100, and a transmitter 1110.

The third processor 1100 is configured to determine a resource parameter configuration identifier corresponding to a bearer; and
The transmitter 1110 is configured to transmit the resource parameter configuration identifier to a network-side device so that the network-side device determines resource parameter configuration information corresponding to the received resource parameter configuration identifier according to a first correspondence relationship between the resource parameter configuration identifier and the resource parameter configuration information, and configures the user equipment with the bearer according to the determined resource parameter configuration information.

Alternatively the resource parameter configuration identifier is a specific resource identifier, or a resource parameter configuration indicator.

Alternatively the resource parameter configuration identifier is the resource parameter configuration indicator.

The third processor 1100 is configured:
When the network-side device configures the user equipment with the specific resource identifier, to receive a resource parameter configuration indicator from the network-side device, and to create a second correspondence relationship between the resource parameter configuration indicator and the specific resource identifier; and to determine the resource parameter configuration indicator corresponding to the specific resource identifier of the bearer according to the second correspondence relationship.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational operations are performed on the computer or the other programmable data processing device to create a computer implemented process so that the instructions executed on the computer or the other programmable device provide operations for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the spirit and scope of the invention. Thus the invention is also intended to encompass these modifications and variations thereto so long as the modifications and variations come into the scope of the claims appended to the invention and their equivalents.

## Claims

1. A method for configuring a bearer, the method comprising:
determining, by a network-side device, resource parameter configuration information corresponding to a resource parameter configuration identifier for a user equipment according to a first correspondence relationship between the resource parameter configuration identifier and the resource parameter configuration information; and
configuring, by the network-side device, the user equipment with a bearer according to the determined resource parameter configuration information.

2. The method according to claim 1, wherein before the network-side device determines the resource parameter configuration information corresponding to the resource parameter configuration identifier for the user equipment, the method further comprises:
receiving and storing, by the network-side device, the first correspondence relationship from an Operation and Maintenance (OAM) device or a Mobile Management Entity (MME).

3. The method according to claim 1 or 2, wherein the resource parameter configuration identifier is a specific resource identifier, or a resource parameter configuration indicator.

4. The method according to claim 3, wherein before the network-side device determines the resource parameter configuration information corresponding to the resource parameter configuration identifier for the user equipment, the method further comprises:
receiving, by the network-side device, the resource parameter configuration identifier from the user equipment, or the resource parameter configuration identifier for the user equipment from an MME managing the user equipment.

5. The method according to claim 4, wherein before the network-side device receives the resource parameter configuration identifier for the user equipment from the MME managing the user equipment, the method further comprises:
transmitting, by a Serving Gateway (SGW) going to transmit data to the user equipment, a specific resource identifier corresponding to a bearer for transmitting the data, to the MME; and
if the resource parameter configuration identifier is a specific resource identifier, then forwarding, by the MME, the received specific resource identifier to the network-side device,
if the resource parameter configuration identifier is a resource parameter configuration indicator, then determining, by the MME, a resource parameter configuration indicator corresponding to the received specific resource identifier according to a second correspondence relationship between the resource parameter configuration indicator and the specific resource identifier, and transmitting the determined resource parameter configuration indicator to the network-side device.

6. The method according to claim 3, wherein before the network-side device determines the resource parameter configuration information corresponding to the resource parameter configuration identifier for the user equipment, the method further comprises:
transmitting, by a Serving Gateway (SGW) going to transmit data to the user equipment, a specific resource identifier corresponding to a bearer for transmitting the data, to a Mobility Management Entity (MME); and
if the resource parameter configuration identifier is a resource parameter configuration indicator, then forwarding, by the MME, a received specific resource identifier to the network-side device; and
determining, by the network-side device, the resource parameter configuration indicator corresponding to the received specific resource identifier according to a second correspondence relationship between the resource parameter configuration indicator and the specific resource identifier.

7. The method according to claim 3, wherein before the network-side device receives the resource parameter configuration identifier for the user equipment from the user equipment, the method further comprises:
if the resource parameter configuration identifier is a resource parameter configuration indicator, then transmitting, by the network-side device, the resource parameter configuration indicator to the user equipment when configuring a specific resource identifier to the user equipment, so that the user equipment creates a second correspondence relationship between the resource parameter configuration indicator and the specific resource identifier.

8. The method according to claim 3, wherein before the network-side device determines the resource parameter configuration information corresponding to the resource parameter configuration identifier for the user equipment, the method further comprises:
if the resource parameter configuration identifier is a resource parameter configuration indicator, then determining, by the network-side device, the resource parameter configuration indicator corresponding to a received specific resource identifier from the user equipment according to a second correspondence relationship between the resource parameter configuration indicator and the specific resource identifier.

9. A method for configuring a bearer, the method comprising:
determining, by a user equipment, a resource parameter configuration identifier corresponding to a bearer; and
transmitting, by the user equipment, the resource parameter configuration identifier to a network-side device so that the network-side device determines resource parameter configuration information corresponding to the received resource parameter configuration identifier according to a first correspondence relationship between the resource parameter configuration identifier and the resource parameter configuration information, and configures the user equipment with the bearer according to the determined resource parameter configuration information.

10. The method according to claim 9, wherein the resource parameter configuration identifier is a specific resource identifier, or a resource parameter configuration indicator.

11. The method according to claim 10, wherein the resource parameter configuration identifier is the resource parameter configuration indicator; and
before the user equipment determines the resource parameter configuration identifier corresponding to the bearer, the method further comprises:
when the network-side device configures the user equipment with the specific resource identifier, receiving, by the user equipment, a resource parameter configuration indicator from the network-side device, and creating a second correspondence relationship between the resource parameter configuration indicator and the specific resource identifier; and
determining, by the user equipment, the resource parameter configuration identifier corresponding to the bearer comprises:
determining, by the user equipment, the resource parameter configuration indicator corresponding to the specific resource identifier of the bearer according to the second correspondence relationship.

12. A network-side device for configuring a bearer, the network-side device comprising:
a first determining module configured to determine resource parameter configuration information corresponding to a resource parameter configuration identifier for a user equipment according to a first correspondence relationship between the resource parameter configuration identifier and the resource parameter configuration information; and
a configuring module configured to configure the user equipment with a bearer according to the determined resource parameter configuration information.

13. The network-side device according to claim 12, wherein the first determining module is further configured:
to receive and store the first correspondence relationship from an OAM device or an MME before the resource parameter configuration information corresponding to the resource parameter configuration identifier for the user equipment is determined.

14. The network-side device according to claim 12 or 13, wherein the resource parameter configuration identifier is a specific resource identifier, or a resource parameter configuration indicator.

15. The network-side device according to claim 14, wherein the first determining module is further configured:
to receive the resource parameter configuration identifier from the user equipment, or the resource parameter configuration identifier for the user equipment from an MME managing the user equipment, before the resource parameter configuration information corresponding to the resource parameter configuration identifier for the user equipment is determined.

16. The network-side device according to claim 14, wherein the first determining module is further configured:
if the resource parameter configuration identifier is a resource parameter configuration indicator, to determine the resource parameter configuration indicator corresponding to a received specific resource identifier according to a second correspondence relationship between the resource parameter configuration indicator and the specific resource identifier before the resource parameter configuration information corresponding to the resource parameter configuration identifier for the user equipment is determined, and after the specific resource identifier forwarded from an MME is received.

17. The network-side device according to claim 14, wherein the first determining module is further configured:
if the resource parameter configuration identifier is a resource parameter configuration indicator, to transmit the resource parameter configuration indicator to the user equipment when configuring a specific resource identifier to the user equipment, so that the user equipment creates a second correspondence relationship between the resource parameter configuration indicator and the specific resource identifier.

18. The network-side device according to claim 14, wherein the first determining module is further configured:
if the resource parameter configuration identifier is a resource parameter configuration indicator, to determine the resource parameter configuration indicator corresponding to a received specific resource identifier from the user equipment according to a second correspondence relationship between the resource parameter configuration indicator and the specific resource identifier before the resource parameter configuration information corresponding to the resource parameter configuration identifier for the user equipment is determined, and after the specific resource identifier from the user equipment is received.

19. A user equipment for configuring a bearer, the user equipment comprising:
a second determining module configured to determine a resource parameter configuration identifier corresponding to a bearer; and
a transmitting module configured to transmit the resource parameter configuration identifier to a network-side device so that the network-side device determines resource parameter configuration information corresponding to the received resource parameter configuration identifier according to a first correspondence relationship between the resource parameter configuration identifier and the resource parameter configuration information, and configures the user equipment with the bearer according to the determined resource parameter configuration information.

20. The user equipment according to claim 19, wherein the resource parameter configuration identifier is a specific resource identifier, or a resource parameter configuration indicator.

21. The user equipment according to claim 20, wherein the resource parameter configuration identifier is the resource parameter configuration indicator; and
the second determining module is configured:
when the network-side device configures the user equipment with the specific resource identifier, to receive a resource parameter configuration indicator from the network-side device, and to create a second correspondence relationship between the resource parameter configuration indicator and the specific resource identifier; and to determine the resource parameter configuration indicator corresponding to the specific resource identifier of the bearer according to the second correspondence relationship.
